# EUROPÄISCHE PATENTSCHRIFT

(11) **EP 2 289 462 B1**
(45) Veröffentlichungstag und Bekanntmachung des Hinweises auf die Patenterteilung: **30.05.2012**
(21) Anmeldenummer: 09168560.2
(22) Anmeldetag: 25.08.2009
(51) Int. Cl.: A61C 13/00, B29C 67/00

(54) **Vorrichtung und Verfahren zur kontinuierlichen, generativen Fertigung**
Device and method for continuous generative production
Dispositif et procédé de fabrication générative en continu

(43) Veröffentlichungstag der Anmeldung: 02.03.2011
(73) Patentinhaber: BEGO Medical GmbH, 28359 Bremen (DE)
(72) Erfinder: Uckelmann, Ingo, 28209, Bremen (DE); Schwartz, Andreas, 28790, Schwanewede (DE)
(74) Vertreter: Eisenführ, Speiser & Partner

(56) Entgegenhaltungen:
- EP-A1- 1 358 855
- EP-B1- 1 037 739
- DE-A1- 4 102 260
- US-A1- 2003 003 180
- US-A1- 2003 205 849

## Beschreibung

Die Erfindung betrifft ein Verfahren zum Herstellen von Produkten mit individueller Geometrie, insbesondere Zahnersatz oder dentalen Hilfsteilen, mit den Schritten Herstellen mehrerer Produkte auf der Oberfläche einer Substratplatte mittels selektiven Aushärtens, insbesondere mittels selektiven Sinterns oder Schmelzens, bei dem das Material in aufeinanderfolgenden Schichten aufgetragen wird, nach jedem Schichtauftrag ein oder mehrere vorbestimmte Bereiche der aufgetragenen Schicht mittels einer energiereichen Strahlung selektiv ausgehärtet und mit einem oder mehreren Bereichen der darunter liegenden Schicht verbunden werden, wobei die vorbestimmten Bereiche anhand einer Querschnittsgeometrie des Produkts in der jeweiligen Schicht vorbestimmt werden. Ein weiterer Aspekt der Erfindung ist eine Vorrichtung zur Durchführung eines solchen Verfahrens.

EP 1358 855 offenbart ein Verfahren gemäss dem Oberbegriff des Anspruchs 1 und eine Vorrichtung gemäss dem Oberbegriff des Anspruchs 13.

Generative Fertigungsverfahren, d.h. Fertigungsverfahren, bei denen ein Material in einem additiven Herstellungsprozess zu einem individuellen Produkt geformt wird, finden ihre Anwendung im Bereich der Herstellung von Prototypen und haben inzwischen auch in der Produktherstellung, insbesondere bei der Anfertigung individuell geformter Produkte oder von Kleinstserien, ihre Anwendung gefunden. Aus EP 1021997B1 ist es beispielsweise bekannt, individuell geformten Zahnersatz oder dentale Hilfsteile mittels eines selektiven Lasersinterprozesses unter bestimmten Parametern herzustellen.

Neben einem solchen, für Zahnersatz besonders geeigneten selektivem Lasersinter- oder Laserschmelzverfahren (SLS, SLM) für metallische Pulver, können für andere Produkte auch andere generative Fertigungsverfahren geeignet sein, beispielsweise Verfahren, bei denen ein Granulat oder anderes festes Material durch einen hochenergetischen Strahl, wie beispielsweise einen Laserstrahl oder Elektronenstrahl gesintert oder geschmolzen und auf diese Weise verbunden und ausgehärtet wird, oder Verfahren, bei denen ein in fester oder flüssiger Form vorliegender Kunststoff durch einen hochenergetischen Strahl, wie beispielsweise einen Laser- oder gebündelten Lichtstrahl durch Photopolymerisation selektiv ausgehärtet wird.

Diese generativen Fertigungsverfahren arbeiten regelmäßig solcherart, dass auf einer Substratplatte aufeinanderfolgend Schichten des aushärtbaren Materials aufgetragen werden, beispielsweise indem die Substratplatte sukzessive und diskontinuierlich in ein flüssiges Bad des aushärtbaren Materials abgesenkt wird oder indem mittels einer Pulverauftragsvorrichtung sukzessive Schichten auf der Substratplatte übereinander aufgetragen werden. Nach jedem Schichtauftragsvorgang werden bestimmte Teile der Schicht selektiv ausgehärtet und auf diese Weise das Produkt schichtweise aufgebaut. Nach Fertigstellung des Produkts durch Aushärtung der letzten Schicht können nicht ausgehärtete Bereiche des Materials entfernt und häufig wiederverwendet werden. Das SLS oder SLM-Verfahren ist prinzipiell in EP 0734842 A1 beschrieben, dessen Offenbarung diesbezüglich vollständig einbezogen wird.

Ein grundsätzliches Problem der generativen Fertigungsverfahren ist die lange Zeitdauer, die zwischen der Erstellung der Fertigungsdaten und der Fertigstellung des Produkts vergeht. Es ist bekannt, auf einer Substratplatte mehrere Produkte gleichzeitig generativ aufzubauen, um auf diese Weise die Anzahl der in einer bestimmten Zeitspanne hergestellten Produkte zu erhöhen. Dieses Vorgehen ist insbesondere bei Produkten mit sehr kleinen Abmessungen in Bezug auf die Abmessungen der Substratplatte sinnvoll und führt zu einer wirksamen Steigerung der Produktivität.

Aus EP 0734842 A1 ist es bekannt, die Stillstandszeit einer Fertigungsvorrichtung zu verringern, indem eine auf einem Träger lösbar befestigte Substratplatte verwendet wird und hierdurch unmittelbar nach Fertigstellung der Produkte auf dieser Substratplatte die Substratplatte entnommen und durch eine neue Substratplatte ersetzt werden kann, um einen neuen Herstellungsprozess zu starten. Während diese Ausgestaltung es ermöglicht, dass die Zeitdauer, die benötigt wird, um die Produkte von der Substratplatte zu entfernen, nicht in die Stillstandszeit der Fertigungsvorrichtung einfließt, weist die Vorrichtung nach wie vor den Nachteil auf, dass erst dann, wenn die Fertigungsdaten aller Produkte vorliegen, die auf einer Substratplatte gefertigt werden sollen, der Fertigungsprozess gestartet werden kann und die Gesamtdauer für die Fertigung eines Produkts hierdurch insbesondere bei einer individuellen Fertigung vieler kleiner Produkte nicht entscheidend herabgesetzt werden kann.

Aus WO 2008/128502 ist eine Vorrichtung bekannt, welche dem gleichen Grundgedanken folgt und eine Fördereinrichtung innerhalb der Fertigungsvorrichtung vorsieht, mit der ein oder mehrere Baubehälter sowie Dosier- oder Vorratsbehälter gefördert werden können, um hierdurch ein einfaches, schnelles und sicheres Pulverhandling innerhalb der Fertigungsvorrichtung zu erzielen. Durch diese Vorrichtung kann in schneller Weise eine Fertigung von Produkten in einem Baubehälter mittels eines Pulvermaterials erfolgen und darauf folgend nach der Fertigstellung dieser Produkte in einem zweiten Baubehälter die Fertigung von Produkten mit einem anderen Pulvermaterial erfolgen. Allerdings benötigt auch bei dieser Fertigungsvorrichtung der Fertigungsprozess mindestens so lange, wie zwischen der Erstellung der Fertigungsdaten aller Produkte auf der Substratplatte und der Fertigstellung der Produkte vergeht, so dass die Fertigung in Bezug auf jedes einzelne einer Mehrzahl von Produkten, die aufgebaut werden, nach wie vor einen verhältnismäßig langen Zeitraum in Anspruch nimmt.

Aus WO 2004/014636 ist ein Verfahren zum schichtweisen generativen Herstellen von dreidimensionalen Objekten bekannt, bei dem in zwei Baubereichen mehrere Objekte simultan hergestellt werden. Hierbei wird in einem Baubereich eine Schicht aufgetragen und in einem anderen Baubereich eine selektive Aushärtung mittels einer Strahlung erzielt. Es sind vier Prozesskammern vorgesehen, die in Form von räumlich voneinander getrennten Einzelkammern oder als Teilbereiche von zwei Doppelkammern oder einer Vierfachkammer vorliegen können. Weiterhin ist vorgesehen, dass ein Laser über eine Umschalteinrichtung mit jeweils einer der Prozesskammern verbindbar ist. Die so beschriebene Vorrichtung und das zur generativen Herstellung von Produkten mit dieser Vorrichtung beschriebene Verfahren weist den Nachteil auf, dass zum Zwecke der simultanen Fertigung mit alternierender Aushärtung und Schichtauftrag in den jeweiligen Prozesskammern eine separate Steuerung des Auftragsvorgangs in jeder der Prozesskammern erforderlich ist. Die Vorrichtung und das Verfahren eignet sich zwar für die aufwendige Spezialanwendung einer Fertigung von mehreren Produkten mit unterschiedlichem Ausgangsmaterial in entsprechend unterschiedlichen Prozesskammern, der Fertigungsprozess und die Vorrichtung ist jedoch sowohl im Aufbau als auch in der Steuerung aufwendig und kann daher hinsichtlich seiner Produktivität der Effizienz zur Fertigung zahlreicher kleiner Produkte und der Zeit, die zwischen der Fertigstellung der Fertigungsdaten eines Produkts und der Fertigstellung des Produkte selbst vergeht, weiter optimiert werden.

Während mit den bekannten Fertigungsverfahren und vorrichtungen nur individuelle Produkte, deren Größe etwa die Substratplatte einnehmen, in einer sowohl produktiven Fertigungsweise als auch mit einer für jedes Einzelprodukt vertretbaren Gesamtfertigungsdauer hergestellt werden können, ist es für Produkte, deren Abmessungen weitaus kleiner sind als die Substratplatte, nur möglich, die Produktivität durch gemeinsame Fertigung mehrerer Produkte auf einer Substratplatte zu sichern, die Fertigungszeit für ein einzelnes Produkt kann jedoch in diesem Fall nicht auf eine wünschenswert kleine Zeitspanne gebracht werden, sondern wird durch die Erstellung von Fertigungsdaten aller auf der Substratplatte herzustellenden Produkte und die hierauf folgende gleichzeitige Fertigung aller Produkte erhöht.

Ein weiteres Problem bei der generativen Fertigung von kleinen Produkten, wobei hierunter Produkte verstanden werden sollen, deren Grundfläche kleiner, insbesondere um mindestens eine Größenordnung kleiner ist als die Oberfläche der Substratplatte, besteht darin, dass in vielen Anwendungsbereichen mit individuellen Produktgeometrien die generative Fertigung als Auftragsfertigung erfolgt, wie beispielsweise bei der Herstellung von Zahnersatz in zahntechnischen Laboren. In diesem Fall kommen die einzelnen Aufträge typischerweise nicht gleichzeitig, sondern zeitversetzt beim Benutzer der Fertigungsvorrichtung an. Um in diesem Fall eine hohe Produktivität und Auslastung der Anlage zu erzielen, muss der Benutzer mehrere Aufträge bündeln, um die in den gebündelten Aufträgen enthaltenen Produkte gleichzeitig auf einer Substratplatte zu fertigen. Dies erzeugt jedoch, insbesondere für den zuerst eingegangenen Auftrag, eine erhebliche Verzögerung zwischen Auftragseingang und Fertigstellung des Produkts. Will der Benutzer hingegen jeden Auftrag in der kürzestmöglichen Zeit bedienen und das entsprechende individuelle Produkt fertigen, so ist er gezwungen, den Fertigungsprozess auf einer Substratplatte mit lediglich einem oder einigen wenigen Produkten durchzuführen, was zu einer insgesamt geringen Auslastung der Fertigungsvorrichtung und niedriger Produktivität führt.

Es ist eine Aufgabe der Erfindung, die bekannten Fertigungsverfahren dahingehend weiterzuentwickeln, dass auch bei Produkten, deren Abmessungen im Verhältnis zur Substratplattenabmessung klein sind, sowohl eine hohe Produktivität als auch eine geringe Fertigungsdauer für jedes einzelne Produkt zu erreichen. Es ist ein weiteres Ziel der Erfindung, ein Fertigungsverfahren und eine Fertigungsvorrichtung bereitzustellen, welche den Zeitraum zwischen Auftragseingang für ein individuell zu fertigendes, kleines Produkt und Fertigstellung des Produkts zu verkürzen, ohne hierbei die Produktivität des Fertigungsverfahrens bzw. der Fertigungsvorrichtung nachteilig zu beeinflussen.

Diese Aufgaben werden erfindungsgemäß mit einem Verfahren der eingangs genannten Art gelöst, bei dem die aufeinanderfolgenden Schichten in Schichtebenen aufgetragen werden, die schräg zu der Oberfläche der Substratplatte ausgerichtet sind.

Auch bei dem erfindungsgemäßen Verfahren werden mehrere Produkte gleichzeitig auf der Oberfläche einer Substratplatte durch einen selektiven Aushärtungsvorgang schichtweise hergestellt. Dabei ist zu verstehen, dass bei dem efindungsgemäßen Verfahren nicht notwendigerweise eine Substratplatte in klassischer Bauweise zum Einsatz kommen muss, also eine kreisrunde oder quadratische oder rechteckige einstückige Substratplatte. Stattdessen kann die erfindungsgemäße Substratplatte beispielsweise als Substratförderband bereitgestellt sein oder als eine aus mehreren Segmenten zusammengesetzte Substratplatte, bei der sich diese Substratplattensegmente beispielsweise entlang einer Richtung aneinanderreihen.

Das erfindungsgemäße Verfahren zeichnet sich dadurch aus, dass die Schichten des aushärtbaren Materials nicht solcherart aufgetragen werden, dass die Schichtebene parallel zu der Oberfläche der Substratplatte ausgerichtet ist, sondern stattdessen so aufgetragen werden, dass die Schichtebene schräg, d.h. unter einem Winkel zwischen 0 und 90° zu der Oberfläche der Substratplatte ausgerichtet ist. Durch diesen schrägen Schichtauftrag auf der Substratplatte wird erreicht, dass die insgesamt deshalb eines Ortes der Substratplatte angeordnete Materialbettdicke nicht an jeder Stelle gleich ist, sondern unterschiedlich. Insbesondere vergrößert sich die Dicke des aufgetragenen Materialbettes ausgehend von einem Bereich, in dem genau eine Schichtdicke auf der Substratplatte aufliegt, kontinuierlich bis in einen Bereich, in dem die maximal auftragbaren Schichten oberhalb der Substratplatte aufgelegt sein können. Dabei ist zu verstehen, dass eine Materialschicht stets über einen Bereich der Substratplatte aufgetragen wird, der zwar nicht notwendigerweise die gesamte Substratplatte überstreichen muss, aber in der Regel einen Bereich überstreicht, in dem mehrere der Produkte, die auf der Substratplatte aufgebaut werden, angeordnet sind.

Durch den erfindungsgemäß schrägen Auftrag der Materialschichten können auf der Substratplatte mit dem erfindungsgemäßen Verfahren mehrere kleine Produkte gleichzeitig aufgebaut werden, die aber in unterschiedlichen Fertigungsstadien sind. So kann in einem Bereich, in dem durch den schrägen Auftrag der Schicht erst eine einzige Schicht auf der Substratplatte aufliegt, ein neues Produkt begonnen werden, wohingegen in einem Bereich, in dem die schräg aufgetragene Schicht auf bereits mehrere zuvor aufgetragene Schichten aufgetragen wird, ein Produkt fertig gestellt werden. Zwischen diesen beiden Endpunkten können ein oder mehrere Produkte in einem Fertigungsstadium zwischen Beginn und Ende, d.h. mit beispielsweise 50 oder 100 bereits aufgetragenen und selektiv ausgehärteten Schichten angeordnet sein.

Das erfindungsgemäße Fertigungsverfahren ermöglicht es hierdurch, unmittelbar nach Fertigstellung der Fertigungsdaten für ein Produkt dessen Fertigung zu beginnen und dieses Produkt dann nach Fertigstellung aus dem Fertigungsprozess zu entnehmen, ohne hierbei darauf warten zu müssen, dass Fertigungsdaten von anderen Produkten fertig gestellt worden sind oder gar andere Produkte fertig gestellt worden sind. Dabei ist zu verstehen, dass in gleicher Weise wie ein quasi kontinuierlicher Fertigungsbeginn aufeinanderfolgender individueller Produkte beim erfindungsgemäßen Verfahren realisiert wird, eine quasi kontinuierliche Entnahme von einzelnen fertig gestellten Produkten bewirkt werden kann, um die Fertigungszeit für jedes einzelne Produkt zu minimieren. Mit dem erfindungsgemäßen Verfahren wird es somit möglich, auch Produkte kleiner Abmessungen in einer solchen Fertigungszeit herzustellen, die nur durch die für die einzelnen Schichtaufträge und deren Aushärten benötigten Prozessschritte erforderlich ist und trotzdem eine hohe Produktivität durch eine parallele Fertigung von mehreren Produkten zu erhalten, indem durch einen schrägen Pulverauftrag in Bezug auf die Substratplatte es ermöglicht wird, Produkte in unterschiedlichen Fertigungsstadien auf einer Substratplatte und mit einem gemeinsamen Schichtauftrag herzustellen. Der Pulverauftrag erfolgt vorzugsweise entlang einer Dichtung, die der Schwerkraft bedingten Fließrichtung des Pulvers in der Schicht entgegengesetzt ist, wenn die Schicht schräg zu Horizontalen verläuft.

Gemäß einer ersten bevorzugten Ausführungsform ist vorgesehen, dass die aufeinanderfolgenden Schichten parallel zueinander aufgetragen werden. Das parallele Auftragen der Schichten ermöglicht eine gleichbleibende Schichtdicke entlang des gesamten Auftragsvorgangs und eine somit einfache Prozesssteuerung. Dabei ist zu verstehen, dass nicht notwendigerweise jede der Schichten die gleiche Dicke erhalten muss, insbesondere kann die Schichtdicke in Abhängigkeit der Produktgeometrie größer oder kleiner gewählt werden, um die durch die Schichtdicke vorgegebene geometrische Auflösung der Produktgeometrie anzupassen.

Gemäß einer weiteren bevorzugten Ausführungsform ist vorgesehen, dass jede der aufeinanderfolgenden Schichten in einem Winkel aufgetragen wird, der kleiner oder gleich dem Schüttwinkel des Materials auf der Substratplatte ist. Grundsätzlich ist hierbei der Winkel, in dem eine Schicht aufgetragen wird, als der Winkel zu verstehen, der als spitzer Winkel zwischen der Ebene der Oberfläche der Substratplatte und der Ebene der aufgetragenen Schicht eingeschlossen ist. Unter dem Schüttwinkel des Materials ist derjenige Winkel zu verstehen, der sich zwischen den Seitenflächen eines Materialberges und einer Grundfläche einstellt, auf den das Material im Wege einer Schüttung aufgetragen wird. Der Schüttwinkel eines Materials ist umso kleiner, je größer die Gleitfähigkeit des Materials auf der Oberfläche, auf welche es aufgetragen wird, ist und je höher die Gleitfähigkeit des Materials in sich selbst, also beispielsweise die Gleitfähigkeit der einzelnen Pulverkörner eines pulverförmigen Materials untereinander ist. Wenn die aufeinanderfolgenden Schichten beim erfindungsgemäßen Verfahren in einem Winkel aufgetragen werden, der kleiner als der Schüttwinkel ist oder dem Schüttwinkel entspricht, so kann auf diese Weise sichergestellt werden, dass eine aufgetragene Schicht nicht durch Abrutschen von Schichtteilen oder einzelnen Materialpartikeln oder dgl. ihre aufgetragene geometrische Form nachträglich verliert. Stattdessen wird bei der Wahl eines solchen Auftragswinkels sichergestellt, dass die Schicht als freie Schüttung stabil liegen bleibt und folglich in einfacher und geometrisch präziser Weise selektiv ausgehärtet werden kann.

Um den Schüttwinkel positiv zu beeinflussen, das heißt einen möglichst großen Schüttwinkel zu erzielen und folglich auch die Schichten in einem möglichst großen Winkel auftragen zu können, kann einerseits die Oberfläche der Substratplatte in spezifischer Weise bearbeitet werden, beispielsweise durch Polieren, Schleifen, Läppen, Honen, Beizen, Trovalieren, Sandstrahlen, Fräsen, Drehen und andere Bearbeitungsverfahren. Hierbei kann das Fertigungsverfahren vorzugsweise solcher Art eingestellt werden, dass eine für einen großen Schüttwinkel günstige Rauheit der Substratplatte erreicht wird, die typischerweise im Bereich von 0,5µm bis 50µm Rz (gemittelte Rauhtiefe nach DIN EN ISO 4287:1998) liegt, oder typischerweise im Bereich von 0,1 µm bis 10 µm Ra (Mittenrauhwert) liegt oder im Bereich von 0,04 mm bis 1,3 mm RSm (mittlere Rillenbreite nach DIN EN ISO 4287:1998 bei periodischen Profilen, wie sie beispielsweise beim Fräsen zu finden ist), liegt. Dabei ist zu verstehen, dass diese bevorzugten Rauhigkeitsbereiche der Substratplatte für typische Pulver vorteilhaft sind, die für das selektive Lasersintern oder selektive Laserschmelzen zu Einsatz kommen, insbesondere um hierdurch formgetreu und präzise kleine Teile wie dentale Implantate oder Hilfsteile herzustellen.

Vorzugsweise kann weiterhin die Oberfläche des Pulvers mittels Polieren, Schleifen, Beizen, Sandstrahlen, Trovalieren oder Beschichten bearbeitet werden, um den Schüttwinkel im oben genannten Sinne positiv zu beeinflussen.

Sofern flüssige Materialien als aushärtbares Material zum Einsatz kommen, kann die Benetzbarkeit der Oberfläche positiv beeinflusst werden durch eine chemische, optische oder mechanische Oberflächenbehandlung, wie beispielsweise Laserstrahlaufrauhen.

Ein weiterer Ansatzpunkt, um den Schüttwinkel im oben genannten Sinne positiv zu beeinflussen ist die genannte Granulierung des Materials. Dies kann beispielsweise erfolgen, in dem geschmolzenes Metall in dünnem Strahl in kaltes Wasser unter beständigem Umrühren gegossen wird um so granuliertes Material zu erhalten. Andere, leicht schmelzbare Metalle kann man granulieren, indem man sie in eine innenwändig stark mit Kreide ausgestrichene Büchse gießt und nach Verschließen der Büchse schüttelt, bis das Metall erkaltet ist.

Dabei ist es für das erfindungsgemäße Verfahren und die erfindungsgemäße Vorrichtung insbesondere vorteilhaft, wenn das Material solcher Art aufbereitet wird, dass eine gute Verbindung, Verklammerung oder dergleichen der Materialpartikel untereinander und eine entsprechend schlechte Gleitfähigkeit der Partikel aneinander hergestellt wird, das heißt die Partikel sollten insbesondere eine von der Kugelform abweichende äußere Gestalt haben, zugleich eine hohe Oberflächenrauhigkeit aufweisen und insbesondere vorzugsweise weiterhin von insgesamt unregelmäßiger Gestalt sein. Die Gleitfähigkeit des Materials beeinflusst gleichzeitig dessen Eignung, in dünnen Schichten aufgetragen zu werden und eine dichte Packung mit geringen Hohlraumanteilen einzunehmen. Das Material muss also solcherart aufbereitet werden, dass zum einen ein maximaler Schüttwinkel erreicht wird. Andererseits muss das Material in der dem Prozess angepassten Schichtdicken auftragbar sein und eine möglichst hohe Packungsdichte erzielen, da diese in direktem Zusammenhang mit der erzielten Dichte des hergestellten Produkts steht. Typische Schichtdicken liegen zwischen 5 µm und 200 µm.

Gemäß einer weiteren bevorzugten Ausführungsform ist vorgesehen, dass die Substratplatte zwischen zwei aufeinanderfolgenden Schichtauftragsvorgängen mit einer Richtungskomponente senkrecht zur Ebene, in der die Schicht aufgetragen wird, verfahren wird. Unter einer Richtungskomponente ist in diesem Zusammenhang ein Bewegungsanteil zu verstehen, der gemeinsam mit anderen, in anderen Richtungen stattfindenden Bewegungsanteilen die Gesamtbewegung ausmacht. Durch einen Bewegungsanteil senkrecht zur Ebene des Schichtauftrags kann ein Vorschub erzeugt werden, welcher einen nachfolgenden Schichtauftrag ermöglicht, ohne dass hierfür die Schichtauftragsvorrichtung in anderer Weise als parallel zur Ebene des Schichtauftrags bewegt werden muss. Insbesondere kann diese Richtungskomponente bewirkt werden, indem die Substratplatte in einer Richtung parallel zur Oberfläche der Substratplatte bewegt wird. Eine solche Bewegung enthält aufgrund des Winkels zwischen dieser Oberfläche und der Ebene des Schichtauftrags die für den beim nacheinander folgenden Schichtauftrag erforderlichen Vorschub erforderliche Richtungskomponente.

Es ist insbesondere weiter bevorzugt, dass die Oberfläche der Substratplatte in dem Bereich, in dem die Schichten aufgetragen werden, horizontal in Bezug auf die Schwerkraftrichtung verläuft. In diesem Fall wird die Schicht in einer Ebene aufgetragen, die schräg zur Horizontalen verläuft und die Schichtauftragsvorrichtung muss für einen solchen, schräg zur Horizontalen verlaufenden Schichtauftrag ausgebildet sein.

Bei einer hierzu alternativen, bevorzugten Ausführungsform ist vorgesehen, dass die Oberfläche der Substratplatte in dem Bereich, in dem die Schichten aufgetragen werden, schräg zu Horizontalen in Bezug auf die Schwerkraftrichtung verläuft. Indem die Oberfläche der Substratplatte im Schichtauftragsbereich schräg zur Horizontalen verläuft, wird es ermöglicht, dass die Schicht in einer horizontalen Ebene aufgetragen wird. Die Schichtauftragsvorrichtung kann entsprechend für eine Bewegung in einer horizontalen Ebene ausgebildet sein. Dabei ist zu verstehen, dass auch dann, wenn die Substratplatte schräg zur Horizontalen verläuft, ein auch schräg zur Horizontalen verlaufender Materialauftrag vorgenommen werden kann und die Materialauftragsvorrichtung entsprechend ausgebildet sein kann.

Bei den beiden vorgenannten Ausführungsformen ist es weiterhin vorzugsweise vorgesehen, dass die aufgetragenen Schichten in einen benachbart zu einem Fertigungsabschnitt, in dem die Schichten aufgetragen werden, liegenden, als Haltebereich ausgebildeten, benachbarten Fertigungsabschnitt verfahren werden, in dem eine durch die aufgetragenen Schichten gebildeten oberen Fläche des aufgetragenen Materials durch eine parallel zur Oberfläche der Substratplatte verlaufende untere Fläche einer Deckplatte bedeckt und gestützt wird. Bei dieser Ausgestaltung erfolgt in einem bestimmten Fertigungsabschnitt, in dem die Höhe des Materials oberhalb der Substratplatte eine bestimmte Höhe erreicht hat, eine Stützung des Materials durch einerseits die Substratplatte und andererseits eine Deckplatte. Der Abstand zwischen Substratplatte und Deckplatte entspricht dabei der maximalen Höhe des Schichtbettes, also der Anzahl der Schichten multipliziert mit der Schichtdicke. Durch das Bereitstellen einer solchen Deckplatte kann das Material in einer günstigen Weise auf der Substratplatte stabilisiert werden und hierdurch der schräge Schichtauftrag in geometrisch präziser und reproduzierbarer Weise bewerkstelligt werden. Die Deckplatte kommt hierbei jeweils mit den von der Substratplatte weg weisenden Endbereichen der Materialschichten in Kontakt und stützt diese ab. Dabei ist zu verstehen, dass die Deckplatte auch in Form eines Endlosförderbandes oder einer sich mitbewegenden Platte ausgeführt sein kann, die sich synchron zur Bewegung der Substratplatte bewegt. Auf diese Weise wird eine Relativbewegung zwischen dem aufgetragenen Material und der Deckplatte vermieden, welche andernfalls eine Störung der Gleichmäßigkeit des Schichtauftrags im Randbereich zur Deckplatte zur Folge haben könnte.

Gemäß einer weiteren bevorzugten Ausführungsform ist die Oberfläche der Substratplatte in eine erste Oberfläche eines ersten Substratplattensegments und zumindest eine weitere Oberfläche eines weiteren Substratplattensegments unterteilt. Bei dieser Fortbildung wird die Substratplatte in zwei oder mehrere benachbarte Substratplattensegmente unterteilt. Unter einem Substratplattensegment ist hierbei ein fertigungstechnisch separater Abschnitt der Substratplatte zu verstehen, der alleinig aufgrund von Steuerungsdaten des Schichtauftrags und der Aushärtefolge definiert sein kann. In diesem Fall stellt ein Substratplattensegment den Bereich der Substratplatte dar, auf dem ein oder mehrere Produkte gefertigt werden, die zeitgleich von der Substratplatte entnommen werden können, da sie quasi zeitgleich begonnen und fertig gestellt werden. Unter einem Substratplattensegment kann insbesondere aber auch ein physikalisch separates Bauteil verstanden werden. In diesem Fall setzt sich die Substratplatte durch mehrere aneinander gefügte Segmente zusammen. Die Segmente können in diesem Fall ebenfalls dazu genutzt werden, um auf jeweils einem Segment eines oder mehrere Produkte aufzubauen, die quasi zeitgleich begonnen und fertig gestellt werden und dann von dem Substratplattensegment abgelöst werden können.

Dabei ist es insbesondere bevorzugt, wenn die Substratplattensegmente lösbar miteinander oder lösbar mit einem Grundträger verbunden sind und jedes Substratplattensegment nach Herstellen eines oder mehrere Produkte auf seiner Oberfläche von einem benachbarten Substratplattensegment oder dem Grundträger gelöst wird, um das/die darauf befindliche(n) Produkt(e) weiteren Bearbeitungsschritten zuzuführen. Mit dieser Fortbildung wird es möglich, jedes Substratplattensegment aus der Fertigungsvorrichtung herauszunehmen, um die darauf befindlichen, fertig gestellten Produkte weiteren Bearbeitungsschritten zuzuführen. Solche weiteren Bearbeitungsschritte können beispielsweise ein sorgfältiges Abtrennen des Produkts von dem Substratplattensegment eine spanende Nachbearbeitung, ein nachträgliches Aushärten und dgl. sein.

Noch weiter ist es dabei insbesondere bevorzugt, wenn die Substratplattensegmente in dem Fertigungsabschnitt, in dem die Schichten aufgetragen werden, so nebeneinander bereitgestellt werden, dass zwischen den Substratplattensegmenten kein Material hindurchtreten kann. Die solcherart durchgeführte Bereitstellung der Substratplattensegmente ist insbesondere vorteilhaft, wenn mit einer einzigen Schichtauftragsvorrichtung Schichten über mehrere Substratplattensegmente hinweg in einem Arbeitsgang aufgetragen werden. In diesem Fall wird verhindert, dass Material aus einem Schichtauftrag zwischen den Substratplattensegmenten hindurchtreten kann, was einerseits unerwünschten Materialverlust und andererseits eine geometrische Beeinflussung der Schichtdicke und des Schichtverlaufs haben könnte. Dies kann beispielsweise erreicht werden, indem die Substratplattensegmente mit zueinander kongruenten Kantenabschnitten unmittelbar aneinander anliegen oder indem eine entsprechende separate Dichtung zwischen zwei Substratplattensegmenten angeordnet ist.

Noch weiter ist es bevorzugt, dass die Substratplattensegmente als Segmente einer Endlosfördervorrichtung ausgebildet sind. Die Substratplattensegmente können beispielsweise an einem Endlosförderband befestigt sein oder solcherart miteinander verbunden sein, dass sie in Gestalt einer Gliederkette ein solches Endlosförderband bilden. In diesem Fall können die Substratplattensegmente in aufeinander folgender Weise entlang eines Obertrums und eines Untertrums bewegt werden, wobei während der Bewegung entlang des Obertrums der Schichtauftrag und die selektive Schichtaushärtung erfolgt. Die Entfernung von nicht ausgehärtetem, aufgetragenem Material aus dem Zwischenraum zwischen den hergestellten Produkten und die Entnahme der Produkte kann ebenfalls im Bereich des Obertrums erfolgen, beispielsweise durch entsprechende Absaugeinrichtungen bzw. mechanische Trennvorrichtungen. Es ist aber in gleicher Weise auch möglich, die Entfernung nicht ausgehärteten Materials im Bereich des Untertrums oder bei Übergang vom Obertrum in den Untertrum erfolgen zu lassen, beispielsweise schwerkraftbedingt und die fertig gestellten Produkte dann entweder mitsamt eines Substratplattensegments oder unmittelbar vom Substratplattensegment im Bereich des Untertrums abzunehmen.

Gemäß einer weiteren bevorzugten Ausführungsform ist vorgesehen, dass die Substratplattensegmente solcherart ausgebildet und angeordnet werden, dass ein erstes Produkt oder eine Gruppe von ersten Produkten auf einem einzigen Substratplattensegment aufgebaut wird und das ein weiteres Produkt oder eine Gruppe von weiteren Produkten auf einem weiteren oder mehreren weiteren Substratplattensegmenten aufgebaut wird. Bei dieser Ausgestaltung können einerseits ein oder mehrere Produkte auf einem einzigen Substratplattensegment hergestellt werden, um auf diese Weise mit hoher Produktivität kleine Produkte in einer sehr schnellen Fertigungszeit herzustellen. Andererseits ist es auch möglich, ein einziges Produkt auf mehreren Substratplattensegmenten herzustellen. Dies kann insbesondere dann vorteilhaft sein, wenn größere Produkte mit dem erfindungsgemäßen Verfahren hergestellt werden sollen, also solche Produkte, deren Längsstreckung oder Auflagefläche größer als die Oberfläche eines Substratplattensegments ist. Noch weiter ist vorgesehen, dass eine Gruppe von mehreren Produkten auf zwei oder mehr Substratplattensegmenten hergestellt werden kann. Dies kann insbesondere bei Produkten erforderlich sein, die sich in nur einer bestimmten Richtung sehr weit erstrecken. So kann mit dem erfindungsgemäßen Verfahren ein Produkt hergestellt werden, dessen Länge über mehrere Substratbettensegmente reicht. Wenn mehrere solcher Produkte hergestellt werden sollen, so kann gemäß dieser Fortbildungsform eine Gruppe, von solchen Produkten gebildet werden und diese Gruppe über mehrere Substratplattensegmente erstreckt, dann hergestellt werden.

Das erfindungsgemäße Verfahren zeichnet sich insbesondere dadurch aus, dass das Material als zusammenhängende Schicht auf das erste und das zumindest eine weitere Substratplattensegment solcherart aufgetragen und selektiv ausgehärtet wird, dass der maximale Abstand zwischen dem ersten Substratplattensegment und einem zur Herstellung des ersten Produkts darauf aufgetragenen Schichtabschnitts der Schicht in zumindest einem, vorzugsweise mehreren, insbesondere allen Verfahrensstadien sich von dem maximalen Abstand zwischen dem weiteren Substratplattensegment und einer zur Herstellung des weiteren Produkts darauf aufgetragenen Schichtabschnitts der Schicht unterscheidet. Gemäß des erfindungsgemäßen Verfahrens liegt das Material also zumindest in einem Verfahrensstadium der Fertigung solcherart vor, dass der Abstand zwischen einem ersten Substratplattenbereich und der oberhalb dieses Bereichs aufgetragenen Schicht größer ist als der Abstand zwischen einem anderen Substratplattenbereich und der oberhalb dieses anderen Bereichs aufgetragenen Schicht, bei der es sich um dieselbe Schicht handelt wie zuvor. Noch weiter kann das erfindungsgemäße Verfahren fortgebildet werden durch die Schritte: Entfernen von auf dem ersten Substratplattensegment angeordnetem Material, welches nicht ausgehärtet wurde, ohne hierbei Material eines weiteren Substratplattensegments zu entfernen, und darauffolgendes Entfernen von auf einem weiteren Substratplattensegment angeordnetem Material, welches nicht ausgehärtet wurde. Für die erfindungsgemäße, quasi-kontinuierliche generative Fertigung ist es an der Entnahmestelle besonders vorteilhaft, wenn das Entfernen des nicht ausgehärteten Materials in solcher Weise erfolgen kann, dass ein benachbarter Bereich hierdurch nicht beeinflusst wird und das nicht ausgehärtete Material in diesem benachbarten Bereich stehen bleibt. Während der generativen Fertigung hat das nicht ausgehärtete Material eine Stützfunktion und dient dazu, um darüber liegende Schichten aufzunehmen und zu tragen. Das nicht ausgehärtete Material darf daher in der Regel nicht entfernt werden, bevor das Produkt nicht vollständig aufgebaut und ausgehärtet worden ist. Um nun aber unter einer solchen Vorgabe die Notwendigkeit zu verhindern, dass fertig gestellte Produkte zunächst eine längere, der Prozesssicherheit dienende Strecke zurücklegen müssen, bis sie zu der Entnahmestelle gelangen, an dem das nicht ausgehärtete Material entfernt wird, ist es vorteilhaft, wenn die Materialentfernungsvorrichtung die Materialentfernung bewerkstelligen kann, ohne den unmittelbar benachbarten Bereich hierbei zu beeinflussen. Dies ermöglicht die schnelle und quasi-kontinuierliche Fertigung und vermeidet die Bereitstellung eines Sicherheitsabstandes zwischen Schichtauftragsvorrichtung und Materialentfernungsvorrichtung.

Noch weiter ist es bevorzugt, dass in einer ersten Phase des Herstellungsvorgangs nur Schichtbereiche einer Schicht selektiv ausgehärtet werden, welche zur Herstellung des ersten Produktes dienen und in einer letzten Phase des Herstellungsvorgangs nur Schichtbereiche einer Schicht selektiv ausgehärtet werden, welche zur Herstellung des weiteren Produktes dienen und vorzugsweise in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen. Mit der so erreichten, quasi-kontinuierlichen und simultanen Fertigung von Produkten in unterschiedlichen Fertigstellungsstadien wird ein produktives und schnelles Verfahren zur individuellen Herstellung von kleinen Produkten mittels eines generativen Fertigungsverfahrens erzielt.

Noch weiter ist es bevorzugt, wenn zwischen den Substratplattensegmenten eine Trennwand bereitgestellt wird, welche den oberhalb jedes Substratplattensegments bestehenden Bauraum von dem oberhalb eines benachbarten Substratplattensegments bestehenden Bauraum abtrennt. Eine solche Trennwand ermöglicht oder vereinfacht die Entfernung von nicht ausgehärtetem Material oberhalb von einem Substratplattensegment, ohne hierbei das nicht ausgehärtete Material in einem hierzu benachbarten Substratplattensegment zu beeinflussen. Dabei ist zu verstehen, dass eine solche Trennwand als Bestandteil der Fertigungsvorrichtung bereitgestellt werden kann und in diesem Fall beispielsweise so ausgeführt werden kann, dass sie simultan zum Schichtauftrag nachgeführt wird, um jeweils die exakte Höhe oder etwas weniger als die exakte Höhe des Materialauftrags im Bereich zwischen zwei Substratplattensegmenten aufzuweisen.

Gemäß einer hierbei bevorzugten Ausführungsform ist vorgesehen, dass die Trennwand durch Aushärten des aufgetragenen Materialmaterials während des Herstellungsvorgangs des/der Produkts/Produkte hergestellt wird. Mit dieser Fortbildungsform wird jeweils am Rand eines Substratplattensegments während des Fertigungsvorgangs aus dem aufgetragenen Material eine solche Trennwand hergestellt. Diese Vorgehensweise hat den Vorteil, dass auf konstruktiv aufwändige Trennwandnachführungen verzichtet werden kann. Stattdessen wird entlang des Randbereichs eines Substratplattensegments eine entsprechende Trennwand aufgebaut, die dann bei Entfernen der Produkte von dem Substratplattensegment ebenfalls entfernt werden kann oder die im Zuge der Entfernung von nicht ausgehärtetem Material von dem benachbarten Substratplattensegment entfernt wird.

Dabei ist es besonders bevorzugt, wenn die Trennwand zwischen zwei Substratplattensegmenten mit zumindest einem der beiden Substratplattensegmente verbunden ist. Durch Verbindung der Trennwand mit beiden Substratplattensegmenten, welche sie voneinander abtrennt, kann zugleich auch eine sichere Abdichtung gegen Materialdurchtritt zwischen den Substratplattensegmenten erreicht werden. Die Verbindung kann hierbei durch generativen Aufbau der Trennwand auf einem oder beiden Substratplattensegmenten oder durch entsprechend konstruktive Verbindung eines zur Vorrichtung gehörenden Trennwandbauteils erzielt werden.

Gemäß einer noch weiteren bevorzugten Ausführungsform ist vorgesehen, dass das Material in einem ersten Fertigungsabschnitt in einem quasi-kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi-kontinuierlich entnommen werden. Durch diese Ausgestaltung wird ein quasi-kontinuierlicher, generativer Fertigungsprozess ausgeführt, der sich durch hohe Produktivität auszeichnet und zugleich auch sehr kleine Produkte in einer sehr kurzen Zeitspanne generativ herstellen kann. Diese Fertigungsweise ermöglicht eine qualitativ hochwertige generative Herstellung in einem ersten Fertigungsabschnitt und zugleich eine diese generative Fertigung nicht negativ beeinflussende Entnahme von fertig gestellten Produkten in einem zweiten Fertigungsabschnitt, der von dem ersten Fertigungsabschnitt beabstandet ist. Dies kann insbesondere mittels eines Endlosförderbandes, an dem die Substratplattensegmente angeordnet sind oder welches durch die Substratplattensegmente gebildet wird, erreicht werden. Insbesondere kann bei dieser Ausgestaltung der erste Fertigungsabschnitt in einer abgeschlossenen, inerten Atmosphäre gehalten werden, um die für eine generative Fertigung nach bestimmten Verfahren erforderliche Randbedingung einstellen zu können, wohingegen der zweite Fertigungsabschnitt eine Ausschleusung der Produkte ermöglicht oder die Produkte bereits beim Übergang vom ersten in den zweiten Fertigungsabschnitt aus der inerten Atmosphäre ausgeschleust werden.

Noch weiter ist es bevorzugt, dass vor jedem Materialauftrag die ausgehärteten Bereiche der zuvor aufgetragenen Schicht oberflächlich beschliffen werden. Durch eine solche Oberflächenbearbeitung, die insbesondere als Beschleifung, aber auch durch andere spanende Fertigungsverfahren mit geometrisch definierter oder geometrisch undefinierter Schneide erfolgen kann, wird die geometrische Präzision des generativen Fertigungsverfahrens weiter erhöht. Insbesondere wird durch eine solche spanende Bearbeitung eine definierte Auflagefläche und Verbindungsstelle für die darüber liegende Schicht und die darin auszuhärtenden Bereiche bereitgestellt. Zudem wird durch die spanende Bearbeitung eine definierte Schichtdicke eingestellt, was für ein reproduzierbares geometrisches Fertigungsergebnis vorteilhaft ist.

Noch weiter ist es bevorzugt, dass zur Aushärtung des/der Produkte auf der Substratplatte, insbesondere auf allen Substratplattensegmenten eine einzige Strahlungsquelle, insbesondere ein einziger Strahlengang einer einzigen Strahlungsquelle genutzt wird. Grundsätzlich ist zu verstehen, dass zur Beschleunigung des Fertigungsvorgangs auch auf mehrere Strahlenquellen oder mehrere Strahlengänge einer einzigen Strahlenquelle zurückgegriffen werden kann. Das erfindungsgemäße Herstellungsverfahren zeichnet sich aber insbesondere dadurch aus, dass es zwar mehrere Produkte gleichzeitig herstellt und diese Produkte in unterschiedlichen Fertigungsstadien sind, d.h. insbesondere aus einer unterschiedlichen Anzahl von Schichten aufgebaut sind. Besonders ist hierbei aber, dass sowohl der Auftrag einer Schicht durch eine einzige Schichtauftragsvorrichtung für alle Substratplattensegmente und darauf aufgebauten, zu fertigenden Produkte erfolgen kann und dass darüber hinaus auch die Aushärtung der bestimmten Bereiche einer Schicht für alle zu fertigenden Produkte durch eine einzige Strahlungsquelle erfolgen kann.

Schließlich kann das erfindungsgemäße Verfahren weiter fortgebildet werden durch die Schritte: Aufbringen einer n-ten Materialschicht auf eine Substratträgerplatte, selektives Aushärten von Teilen der Materialschicht mittels Einwirken einer energiereichen Strahlung, insbesondere einer Laserstrahlung, auf diese Teile der Materialschicht, Führen der energiereichen Strahlung über die n-te Materialschicht nach Führungsdaten, welche aus den geometrischen Daten einer x-ten Querschnittsfläche eines ersten Produkts ermittelt wurden, Aufbringen einer n+1-ten Materialschicht auf die n-te Materialschicht, Führen der energiereichen Strahlung über die n+1-te Materialschicht nach Führungsdaten, welche aus den geometrischen Daten einer x+1-ten Querschnittsfläche des ersten Produkts ermittelt wurden, Führen der energiereichen Strahlung über die n-te Materialschicht nach Führungsdaten, welche aus den geometrischen Daten einer y-ten Querschnittsfläche eines zweiten Produkts ermittelt wurden, und Führen der energiereichen Strahlung über die n+1-te Materialschicht nach Führungsdaten, welche aus den geometrischen Daten einer y+1-ten Querschnittsfläche des zweiten Produkts ermittelt wurden, wobei x ungleich y ist.

Bei dieser Fortbildungsform werden zumindest zwei Produkte hergestellt, indem sie in einem gemeinsamen Schichtauftrag in zwei unterschiedlichen Schichtbereichen ein und derselben Schicht einer selektiven Aushärtung unterzogen werden, wobei in dieser Schicht in den Produkten selbst unterschiedliche Höhen gegenüber der Substratplatte dargestellt sind.

Ein weiterer Aspekt der Erfindung ist eine Vorrichtung zur Herstellung von Produkten mit individueller Geometrie, umfassend eine Substratplatte, eine Materialauftragsvorrichtung zum Auftragen von Materialschichten auf die und oberhalb der Substratplatte, eine Strahlungsquelle für einen hochenergetischen Strahl, Strahlführungsmittel zum Führen des Strahls auf vorbestimmte Bereiche einer auf die Substratplatte aufgetragenen Materialschicht, bei der erfindungsgemäß die Materialauftragsvorrichtung ausgebildet ist, um das Material in einer Ebene aufzutragen, die schräg, insbesondere in einem Winkel der kleiner oder gleich dem Schüttwinkel des Materials ist, zu der Oberflächen der Substratplatte ausgerichtet ist, auf welche das Material aufgetragen wird.

Mit der erfindungsgemäßen Vorrichtung wird eine generative Fertigungsvorrichtung vorgeschlagen, die in schneller Weise bei hoher Produktivität kleine Produkte generativ herstellen kann. Die erfindungsgemäße Vorrichtung zeichnet sich dadurch aus, dass die Materialauftragsvorrichtung, mit der die Materialschichten auf die Substratplatte aufgetragen werden, solcherart ausgebildet ist, dass dieser Schichtauftrag schräg zur Oberfläche der Substratplatte ausgeführt werden kann.

Die erfindungsgemäße Vorrichtung kann weiter fortgebildet werden, indem die Substratplatte in mehrere Substratplattensegmente unterteilt ist und die Materialauftragsvorrichtung zum simultanen Auftragen einer Materialschicht auf eine Anzahl der mehreren Substratplattensegmente ausgebildet ist.

Noch weiter kann die erfindungsgemäße Vorrichtung fortgebildet werden, indem die Substratplattensegmente lösbar miteinander oder lösbar mit einem Grundträger verbunden sind.

Eine weitere bevorzugte Ausführungsform sieht vor, dass die Substratplattensegmente und die Materialauftragsvorrichtung solcherart relativ zueinander bewegbar sind, dass der maximale Abstand zwischen einem ersten Substratplattensegment und einer zur Herstellung des ersten Produkts oberhalb dieses Substratplattensegments aufgetragenen Materialschicht sich von dem maximalen Abstand zwischen einem weiteren Substratplattensegment und einer zur Herstellung eines weiteren Produkts oberhalb dieses weiteren Substratplattensegments aufgetragenen Materialschicht unterscheidet.

Eine weitere bevorzugte Ausgestaltung zeichnet sich durch eine Materialentfernungsvorrichtung aus, insbesondere eine Materialabsaugeinrichtung, wobei die Materialentfernungsvorrichtung ausgebildet ist, um nicht ausgehärtetes Material aus einem ein gefertigtes Produkt umgebenden Bereich zu entfernen, und so angeordnet ist, dass sie das Material um ein fertig gestelltes Produkt auf einem ersten Substratplattensegment entfernt und hierbei das Material um ein Produkt auf einem weiteren, hierzu benachbarten Substratplattensegment belässt.

Noch weiter ist es bevorzugt, wenn die erfindungsgemäße Vorrichtung eine Steuerung aufweist zur Ansteuerung der Führungsvorrichtung des hochenergetischen Strahls, welche ausgebildet ist, um die Führungsvorrichtung so anzusteuern, dass in einer ersten Phase des Herstellungsvorgangs nur Schichtbereiche einer Schicht selektiv ausgehärtet werden, welche zur Herstellung eines ersten Produktes auf einem ersten Substratplattensegment dienen, in einer letzten Phase des Herstellungsvorgangs nur Schichtbereiche einer Schicht selektiv ausgehärtet werden, welche zur Herstellung eines weiteren Produktes auf einem weiteren Substratplattensegment dienen und in einer zwischen der ersten und der letzten Phase liegenden mittleren Phase des Herstellungsvorgangs Schichtbereiche einer Schicht selektiv ausgehärtet werden, welche zur Herstellung des ersten und des weiteren Produktes dienen.

Weiterhin ist bevorzugt vorgesehen, dass die Substratplattensegmente an einem EndlosFörderband angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann und dass vorzugsweise die Materialauftragsvorrichtung so ausgebildet ist, dass das Material in der ersten Richtung aufgetragen wird, vorzugsweise in einem solchen Winkel zur Oberfläche des jeweiligen Substratplattensegments, dass die Fließrichtung des Materials der Auftragsrichtung entgegengesetzt ist.

Gemäß einer weiteren bevorzugten Ausführungsform weist die erfindungsgemäße Vorrichtung eine zwischen den Substratplattensegmenten angeordnete Trennwand auf, welchen den oberhalb jedes Substratplattensegments bestehenden Bauraum von dem oberhalb eines benachbarten Substratplattensegments bestehenden Bauraum abtrennt.

Dabei ist es insbesondere bevorzugt, wenn die Trennwand zwischen zwei Substratplattensegmenten mit zumindest einem der beiden Substratplattensegmenten verbunden oder gegen dieses Substratplattensegment solcherart abgedichtet ist, dass kein Material zwischen Trennwand und Substratplattensegment hindurchtreten kann.

Noch weiter ist es bevorzugt, wenn eine Steuerung vorgesehen ist zur Ansteuerung der Führungsvorrichtung des hochenergetischen Strahls, welche ausgebildet ist, um die Führungsvorrichtung so anzusteuern, dass die Trennwand während des Herstellungsvorgangs des Produkts durch Aushärten des aufgetragenen Materials hergestellt wird.

Besonders bevorzugt weist die erfindungsgemäße Vorrichtung eine einzige Strahlungsquelle auf, die insbesondere mittels eines einzigen Strahlengangs zur Aushärtung aller Produkte, insbesondere der auf allen Substratplattensegmenten hergestellten Produkte genutzt wird.

Noch weiter ist es bevorzugt, eine Steuerung vorzusehen zur Ansteuerung der Führungsvorrichtung des hochenergetischen Strahls, welche ausgebildet ist, um die energiereiche Strahlung über die n-te Materialschicht nach Führungsdaten zu führen, welche aus den geometrischen Daten einer x-ten Querschnittsfläche eines ersten Produkts ermittelt wurden, um Teile der n-ten Materialschicht mittels Einwirken einer energiereichen Strahlung auszuhärten, die energiereiche Strahlung über eine n+1-te Materialschicht nach Führungsdaten zu führen, welche aus den geometrischen Daten einer x+1-ten Querschnittsfläche des ersten Produkts ermittelt wurden, um Teile der n+1-ten. Materialschicht mittels Einwirken der energiereichen Strahlung auszuhärten, die energiereiche Strahlung über die n-te Materialschicht nach Führungsdaten zu führen, welche aus den geometrischen Daten einer y-ten Querschnittsfläche eines zweiten Produkts ermittelt wurden, um Teile der n-ten Materialschicht mittels Einwirken der energiereichen Strahlung auszuhärten und die energiereiche Strahlung über die n+1-te Materialschicht nach Führungsdaten zu führen, welche aus den geometrischen Daten einer y+1-ten Querschnittsfläche des zweiten Produkts ermittelt wurden, um Teile der n+1-ten Materialschicht mittels Einwirken der energiereichen Strahlung auszuhärten wobei x ungleich y ist.

Schließlich kann die erfindungsgemäße Vorrichtung fortgebildet werden, indem an der Materialauftragsvorrichtung eine Bearbeitungsvorrichtung zum Abtragen, eines Teils der ausgehärteten Materialbereiche, vorzugsweise zum oberflächlichen Beschleifen der ausgehärteten Materialbereiche einer zuvor aufgetragenen Materialschicht angeordnet ist.

Bevorzugte Ausführungsformen der Erfindung werden anhand der beiliegenden Figuren beschrieben. Es zeigen:
Fig. 1 eine schematische, längsgeschnittene Seitenansicht eines Fertigungsabschnitts einer generativen Fertigungsstrecke gemäß der Erfindung,
Fig. 2 eine schematische Prinzipdarstellung einer Fertigungsanordnung gemäß der Erfindung,
Fig. 3 eine schematische, längsgeschnittene Seitenansicht eines Fertigungsabschnitts mit Endlosförderband,
Fig. 4 eine schematische, längsgeschnittene Seitenansicht eines Fertigungsabschnitts einer weiteren Ausführungsform der Erfindung, und
Fig. 5 eine schematische Darstellung einer Fertigungsanordnung gemäß der Erfindung.

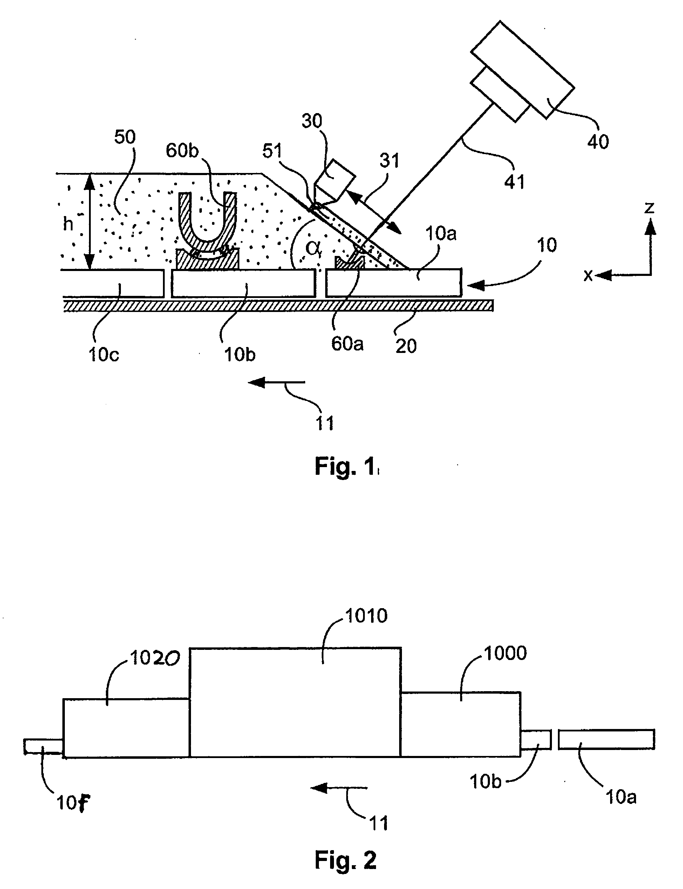

Fig. 1 zeigt eine Substratplatte 10, die aus mehreren Substratplattensegmenten 10a-c besteht. Die Substratplattensegmente 10a-c sind lösbar mit einem darunter angeordneten Substratplattenträger 20 verbunden. Der Substratplattenträger 20 und die Substratplattensegmente 10a-c sind solcherart angeordnet, dass die Oberfläche der Substratplattensegmente 10a-c im Betriebszustand der Vorrichtung horizontal, d.h. senkrecht zur Schwerkraftrichtung ausgerichtet sind.

In Schwerkraftrichtung oberhalb von der oberen Auflagefläche der Substratplattensegmente 10a-c ist eine Beschichtungsvorrichtung 30 angeordnet. Die Beschichtungsvorrichtung 30 ist entlang einer Bewegungsrichtung 31 verschiebbar. Die Bewegungsrichtung 31 ist geradlinig und schließt mit der durch die obere Auflagefläche der Substratplattensegmente 10a-c definierten Ebene einen Winkel α ein. Durch zyklisches Hin- und Herbewegen der Beschichtungsvorrichtung 30 entlang der Bewegungsrichtung 31 kann oberhalb der Substratplattensegmente 10a-c eine in einem Winkel α zur Horizontalen geneigte Pulverschicht aufgetragen werden.

In jedes Substratplattensegment 10a-c kann eine Heizung eingebaut sein, welche das Substratplattensegment und das darauf angeordnete Pulverbett auf einer gewünschten Temperatur hält. Hierdurch, und durch ein oder mehrere gegebenenfalls zusätzlich vorgesehene Strahlerfelder und/oder Heizbänder im Bereich der Beschichtungsvorrichtung, welche die aufgetragene Pulverschicht erwärmen beziehungsweise dessen Temperatur aufrechterhalten, kann die Vorrichtung dahingehend optimiert werden, dass ein gewünschter, vorgewärmter Pulverzustand des Pulvers vor dem selektiven Aushärtungsvorgang erreicht wird.

Die Substratplattensegmente 10a-c können kontinuierlich oder in getakteter, quasi-kontinuierlicher Weise in einer Bewegungsrichtung 11 fortbewegt werden, die parallel zur Horizontalen liegt. Durch die Bewegungsrichtung 11 wird nach Auftrag einer Schicht mittels der Beschichtungsvorrichtung 30 ein Abstand zwischen der Ebene, in der sich die Beschichtungsvorrichtung 30 bewegt und der aufgetragenen Schicht erzeugt, welcher der Schichthöhe der nächsten, aufzutragenden Schicht entspricht.

Eine Strahlungsquelle 40, die ein Hochleistungslaser ist, ist solcherart angeordnet, dass sein Strahl (41) etwa senkrecht, vorzugsweise genau senkrecht auf die Oberfläche einer aufgetragenen Schicht trifft. Der Strahl der Strahlungsquelle 40 kann mit Strahllenkungsmitteln solcherart gelenkt werden, dass er auf vorbestimmte Bereiche einer aufgetragenen Schicht trifft und diese selektiv aushärtet.

Die Strahllenkungsmittel sind mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage der jeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher schräg verlaufenden Querschnittsebenen durch dieses Produkt.

Wie zu erkennen ist, ist oberhalb des Substratplattensegmentes 10c ein Pulverbett (50) aufgetragen, welches aus mehreren Pulverschichtlagen zusammengesetzt ist und welches die maximale Höhe h über den Substratplattensegmenten aufweist. Auch oberhalb des Substratplattensegmentes 10b ist diese maximale Höhe in einem links liegenden Bereich bereits erreicht, allerdings in einem hiervon rechts, entgegen der Förderrichtung 11 liegenden Bereich noch nicht vollständig erreicht. Stattdessen verläuft die Oberfläche des Pulverbetts (50) in diesem rechten Bereich des Substratplattensegmentes 10b, ebenso wie in einem linken Bereich des Substratplattensegmentes 10c geneigt im Winkel α1.

Oberhalb des Substratplattensegmentes 10b ist ein generativ hergestelltes Produkt 60b im Pulverbett in ausgehärteter Form angeordnet. In gleicher Weise wird oberhalb des Substratplattensegmentes 10a ein Produkt 60a generativ hergestellt. Dieser Herstellvorgang erfolgt, indem nach dem Auftrag jeder Pulverschicht 51 vorbestimmte Bereiche dieser Pulverschicht mittels der Strahlungsquelle 40 selektiv ausgehärtet werden. Hierauf folgend wird durch Vorschub der Substratplattensegmente in der Förderrichtung 11 ein der Schichthöhe entsprechender Abstand zwischen der Ebene der Beschichtungsvorrichtung 30 und der zuvor aufgetragenen Schicht hergestellt und hiernach erfolgt ein erneuter Beschichtungsvorgang durch Bewegung der Beschichtungsvorrichtung 30 entlang der Bewegungsrichtung 31. An der Beschichtungsvorrichtung kann vorzugsweise eine Schleifeinrichtung angeordnet sein, die entweder in der Bewegungsrichtung beim Pulverauftrag vor der Position, an der das Pulver aufgetragen wird, angeordnet ist und dazu dient und ausgebildet ist, dass die zuvor ausgehärteten Bereiche oberflächlich angeschliffen werden. Hierdurch kann die Geometrietreue des generativ hergestellten Produkts verbessert und die Anbindung der darauf folgenden auszuhärtenden Bereiche zu erhöht werden. Alternativ hierzu ist es möglich, den Schleifvorgang in einem Rückhubvorgang der Beschichtungsvorrichtung auszuführen, das heißt zwischen dem Fertigungsschritt der selektiven Aushärtung und dem Fertigungsschritt des erneuten Pulverauftrags, In diesem Fall ist die Anordnung der Schleifeinrichtung an der Beschichtungsvorrichtung in Bezug auf die Position, an der das Pulver aufgetragen wird, konstruktiv frei wählbar, da Schleifvorgang und Pulverauftragsvorgang nicht während ein und derselben Bewegung der Beschichtungsvporrichtung erfolgen.

Dieser Prozess wird wiederholt durchgeführt, bis das gesamte Produkt 60c hergestellt ist. Durch die Förderbewegung 11 werden die solcherart generativ hergestellten und fertig gestellten Produkte 60a, b nach links weitergefördert, wo sie nach entsprechender Entfernung des nicht ausgehärteten Pulvers von der Substratplatte entfernt werden können.

Fig. 2 zeigt hierzu einen möglichen Aufbau einer Fertigungsanordnung und einen entsprechenden Prozessablauf. Wie erkennbar ist, werden die Substratplattensegmente 10a, b, c ... von einer rechten Seite in einer horizontalen Bewegungsrichtung 11 in eine Eingangsschleuse 1000 eingeschleust und gelangen in der gleichen Bewegungsrichtung 11 aus der Eingangsschleuse 1000 in eine Prozesskammer 1010 In der Prozesskammer 1010 ist der in Fig. 1 dargestellte Fertigungsabschnitt angeordnet und findet der bezüglich Fig. 1 erläuterte Fertigungsvorgang statt. Nach entsprechender generativer Herstellung der Produkte in der Prozesskammer 1010 gelangen diese durch weitere Bewegung entlang der Bewegungsrichtung 11 in einer Ausgangsschleuse 1020 und werden hierdurch aus der Prozesskammer ausgeschleust.

Durch die Einschleusung der unbeschichteten Substratplattensegmente durch die Eingangsschleuse 1000 und die Ausschleusung der beschichteten und mit generativ hergestellten Produkten bestückten Substratplattensegmenten durch die Ausgangsschleuse 1020 kann in der Prozesskammer 1010 eine für die generative Fertigung günstige Atmosphäre, insbesondere eine Inertgasatmosphäre oder eine Aktivgasatmosphäre, aufrechterhalten werden und hierdurch die Produktqualität sichergestellt werden.

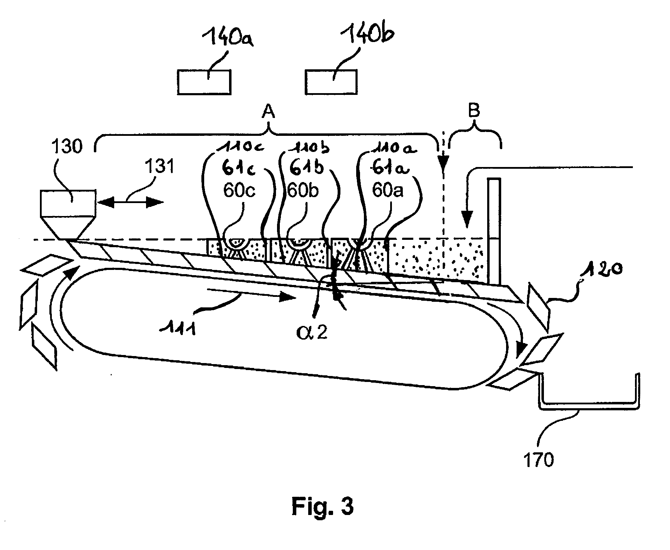

Fig. 3 zeigt eine zweite Ausführungsform eines Fertigungsabschnitts zur generativen Fertigung sowie eines Fertigungsabschnitts zur Abtrennung und Entnahme von generativ hergestellten Produkten. Eine Mehrzahl von Substratplattensegmenten 110a, b, c ... ist solcherart nebeneinander angeordnet, dass hierdurch eine zusammenhängende Substratplatte bereitgestellt wird. Die obere Oberfläche dieser durch die Substratplattensegmente 110a, b, c ... bereitgestellten Substratplatte ist in einem Winkel α2 zur Horizontalen geneigt, d.h. diese Oberfläche steht in einem Winkel 90° - α zur Schwerkraftrichtung.

Oberhalb der Substratplattensegmente 110a, b, c ... ist eine Beschichtungsvorrichtung 130 angeordnet, die sich entlang einer horizontalen Bewegungsrichtung 131 zyklisch hin-und herbewegen kann. Mittels der Beschichtungsvorrichtung 130 wird auf diese Weise eine Pulverschicht aus einem Pulverreservoir, welches an der Beschichtungsvorrichtung 130 angeordnet sein kann oder welches entlang des Bewegungspfades 131 der Beschichtungsvorrichtung 130 angeordnet sein kann, aufgetragen.

Mittels der Beschichtungsvorrichtung 130 kann durch Bewegung entlang der Beschichtungsrichtung 131 eine Pulverschicht oberhalb der Substratplattensegmente 110a, b, c ... aufgetragen werden, die in einem Winkel α2 zur oberen Oberfläche der Substratplattensegmente liegt.

Auf den Substratplattensegmenten 110a, b, c ... wird durch selektives Aushärten jeder aufgetragenen Schicht mittels zweier als Hochleistungslaser ausgebildeten Strahlungsquellen 140a, b vorbestimmte Bereiche jeder Pulverschicht selektiv ausgehärtet und hierdurch Produkte 60a, b, c auf den Substratplattensegmenten schichtweise generativ aufgebaut. Des Weiteren werden zwischen jedem Produkt oder zwischen einer Gruppe von Produkten jeweils Trennwände 61a-d oberhalb der Substratplattensegmente durch entsprechend selektives Aushärten der Schichten aufgebaut. Diese Trennwände unterteilen das Pulverbett oberhalb der Substratplattensegmente in mehrere Pulverbettbereiche. In jedem Pulverbettbereich ist ein oder sind mehrere Produkte angeordnet, die gleichzeitig entnommen werden können.

Die Substratplattensegmente 110a, b, c ... sind an einem Endlosförderband 120 befestigt und werden mittels dieses Endlosförderbands 120 in einer Förderrichtung 111 kontinuierlich oder diskontinuierlich fortbewegt. In einem Fertigungsabschnitt A erfolgt durch diese Förderbewegung 111 und ein wiederholtes Auftragen von Pulverschichten mittels der Beschichtungsvorrichtung 130, gefolgt von einem selektiven Aushärten jeder aufgetragenen Schicht die generative Fertigung der Produkte. Die Pulverbeschichtungsvorrichtung 130 bewegt sich hierbei entlang einer Bewegungsrichtung 131, die in einem Winkel α2 zur Bewegungsrichtung 111 der Substratplattensegmente liegt.

In einem Fertigungsbereich B wird nicht ausgehärtetes Pulvermaterial durch eine Absaugvorrichtung aus dem Bereich zwischen zwei generativ hergestellten Trennwänden 61a-d entfernt und hierauf folgend sowohl die Trennwände als auch die in diesem Bereich zwischen den beiden Trennwänden generativ hergestellten und fertiggestellten Produkte entnommen. In Förderrichtung 111 hinter dem Fertigungsabschnitt B werden die Substratplattensegmente entlang einer Umlenkrolle in den Untertrum des Förderbandes 120 geführt und laufen entlang dieses Untertrums bis zu einer zweiten Umlenkrolle, an der sie wiederum in den Obertrum geführt werden, um einer erneuten Beschichtung mit Pulverschichten und generativer Fertigung von Produkten zugeführt zu werden.

Eine Auffangwanne 170 ist bereitgestellt, um überschüssiges Pulver aufzufangen, welches bei Umlenkung der Substratplattensegmente abfällt.

Wie aus Fig. 3 erkennbar ist, können einzelne Produkte auf einem einzigen Substratplattensegment generativ aufgebaut werden oder ein einzelnes Produkt kann auch auf mehreren Substratplattensegmenten generativ aufgebaut werden. Dabei hängt es allein von der Größe der Substratplattensegmente und der darauf generativ hergestellten Produkte ab, ob mehrere Produkte auf einem Substratplattensegment oder ein Produkt auf mehreren Substratplattensegmenten oder jeweils ein Produkt pro Substratplattensegment hergestellt wird. Insbesondere kann durch die Verwendung von Stützen auch ein Produkt auf einem einzigen Substratplattensegment hergestellt werden, dessen Abmessungen größer als die Abmessungen des Substratplattensegments selbst sind.

Sowohl in der in Fig. 1 als auch in der in Fig. 3 dargestellten Ausführungsform ist der Winkel α1 bzw. α2 zwischen Schichtauftragsrichtung und Oberfläche der Substratplattensegmente kleiner als der Pulverschüttwinkel des aufgetragenen Pulvers, um hierdurch eine Stabilität des aufgetragenen Pulverbetts gegenüber der Einwirkung der Schwerkraft zu erzielen. Grundsätzlich könnte bei der in Fig. 3 dargestellten Ausführungsform der Winkel α2 auch größer als dieser Pulverschüttwinkel gewählt werden, da das Pulverbett durch die Trennwände 61a-d stabilisiert ist und die Pulverschichtlagen selbst horizontal aufgetragen werden und liegen.

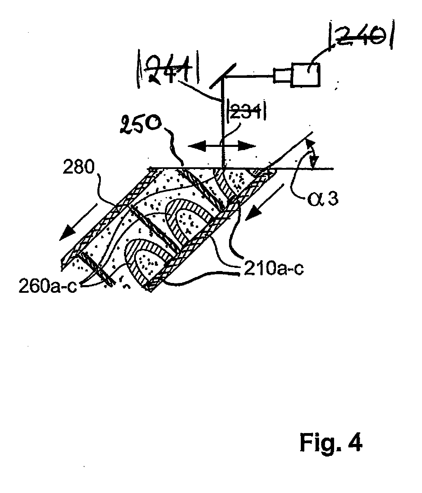

Fig. 4 zeigt eine schematische Darstellung einer alternativen Ausführungsform, bei welcher der Winkel α3 zwischen der Ebene, in welcher der Pulverschichtauftrag erfolgt und der Oberfläche der Substratplattensegmente größer als der Pulverschüttwinkel sein kann. Bei dieser Ausführungsform werden die Produkte 260a-c ebenfalls auf Substratplattensegmenten 210a-c generativ aufgebaut und hierbei ein Pulverbett 250 oberhalb dieser Substratplattensegmente hergestellt. Das Pulverbett 250 wird mittels einer parallel zu den Substratplattensegmenten im Fertigungsabschnitt verlaufenden Deckplatte 280 stabilisiert. Hierbei kann die Deckplatte 280 insbesondere sich kontinuierlich mit den Substratplattensegmenten fortbewegen, um eine Relativbewegung zwischen dem Pulverbett und der Deckplatte 280 zu verhindern.

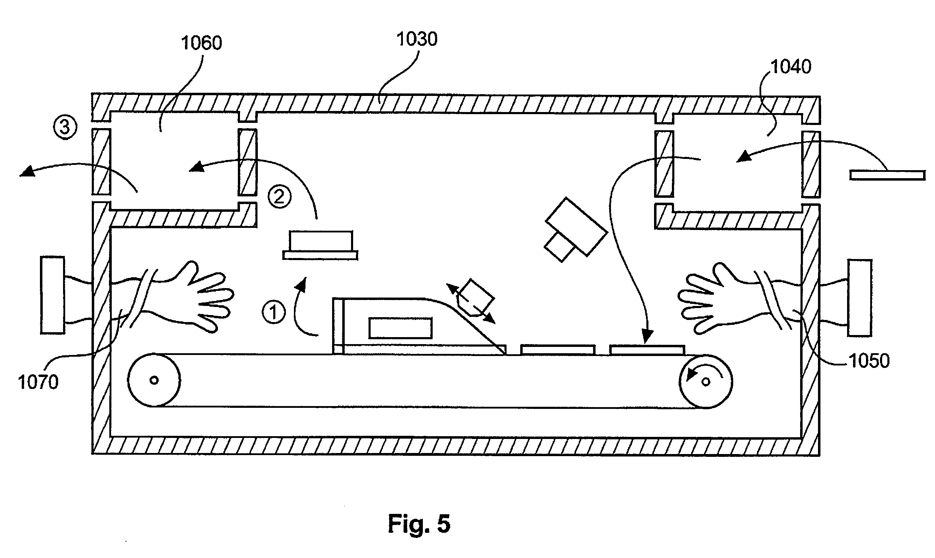

Fig. 5 zeigt eine schematische Darstellung einer Fertigungsanordnung zur kontinuierlichen Herstellung generativ hergestellter Produkte. Die Ausführungsform gemäß Fig. 5 stellt eine Alternative zu der in Fig. 2 dargestellten Ausführungsform dar. Entgegen der in Fig. 2 dargestellten Ausführungsform sind bei der in Fig. 5 dargestellten Ausführungsform sämtliche zur generativen Herstellung und Entnahme der Produkte aus dem generativen Herstellungsprozess erforderlichen Fertigungsabschnitte innerhalb einer Prozesskammer 1030 angeordnet, die unter kontrollierter Atmosphäre, insbesondere einer Inertgas- oder Aktivgasatmosphäre gehalten werden kann.

Wie zu erkennen ist, ist innerhalb der Prozesskammer 1030 ein Fertigungsprozess angeordnet, dessen prinzipielle Systematik dem Fertigungsprozess gemäß Fig. 1 entspricht. Es ist aber zu verstehen, dass in gleicher Weise die in Fig. 5 dargestellte Fertigungsanordnung solcherart ausgestaltet sein kann, dass ein Fertigungsprozess gemäß Fig. 3 oder Fig. 4 in der Prozesskammer stattfindet. Die Prozesskammer 1030 weist eine erste Schleuse 1040 auf, durch welche neue, unbeschichtete und nicht mit Produkten bestückte Substratplatten eingeschleust werden können und auf einem Endlosförderband befestigt werden können. Um diesen Vorgang manuell vornehmen zu können, ist ein Arbeitshandschuh 1050 gasdicht in einem solchen Bereich angeordnet, der eine Aufnahme von Substratplatten aus der Schleuse 1040 und deren Befestigung auf dem Endlosförderband ermöglicht.

Des Weiteren ist an der Prozesskammer 1030 eine zweite Schleuse 1060 angeordnet. Durch die Schleuse 1060 können Substratplatten mit darauf angeordneten, fertig gestellten Produkten aus der Prozesskammer 1030 ausgeschleust werden. Um diesen Vorgang manuell durchführen zu können, ist wiederum im Bereich der Schleuse 1060 ein Handschuh angeordnet, mittels dem in die Prozesskammer 1030 hineingegriffen werden kann, die Substratplattensegmente mitsamt darauf angeordneter Produkte von dem Endlosförderband abgelöst werden können und durch die Schleuse 1060 aus der Prozesskammer 1030 ausgeschleust werden können.

## Patentansprüche

1. Verfahren zum Herstellen von Produkten mit individueller Geometrie, insbesondere Zahnersatz oder dentalen Hilfsteilen, mit den Schritten:
- Herstellen mehrerer Produkte auf der Oberfläche einer Substratplatte (10, 110a-c, 210 a-c) mittels selektiven Aushärtens, insbesondere mittels selektiven Sinterns oder Schmelzens,
- Auftragen eines aushärtbaren Materials in aufeinanderfolgenden Schichten,
- Selektives Aushärten eines oder mehrerer vorbestimmter Bereiche nach jedem Schichtauftrag mittels einer energiereichen Strahiung (41) und hierbei Verbinden dieser Bereiche mit einem oder mehreren Bereichen der darunterliegenden Schicht,
- wobei der/die vorbestimmte(n) Bereich(e) anhand einer Querschnittsgeometrie des Produkts in der jeweiligen Schicht vorbestimmt wird/werden,
**dadurch gekennzeichnet, dass** die aufeinanderfolgenden Schichten in Schichtebenen aufgetragen werden, die schräg zu der Oberfläche der Substratplatte (10, 110a-c, 210 a-c) ausgerichtet sind.

2. Verfahren nach Anspruch 1,
**dadurch gekennzeichnet, dass** jede der aufeinanderfolgenden Schichten in einem Winkel (α) aufgetragen wird, der kleiner oder gleich dem Schüttwinkel des Materials ist.

3. Verfahren nach einem der vorhergehenden Ansprüche,
**dadurch gekennzeichnet, dass** die Substratplatte (10, 110a-c, 210 a-c) zwischen zwei aufeinander-folgenden Schichtauftragsvorgängen mit einer Richtungskomponente senkrecht zur Ebene, in der die Schicht aufgetragen wird, verfahren wird.

4. Verfahren nach einem der vorhergehenden Ansprüche,
**dadurch gekennzeichnet, dass** die Oberfläche der Substratplatte (10, 110a-c, 210 a-c) in dem Be-reich, in dem die Schichten aufgetragen werden, schräg zu Horizontalen in Bezug auf die Schwerkraftrichtung verläuft.

5. Verfahren nach einem der vorhergehenden Ansprüche,
**dadurch gekennzeichnet, dass** die aufgetragenen Schichten in einen benachbart zu einem Fertigungsabschnitt, in dem die Schichten aufgetragen werden, liegenden, als Haltebereich ausgebildeten, benachbarten Fertigungsabschnitt verfahren werden, in dem eine durch die aufgetragenen Schichten gebildeten oberen Fläche des aufgetragenen Materials durch eine parallel zur Oberfläche der Substratplatte (10, 110 a-c, 210 a-c) verlaufende untere Fläche einer Deckplatte (280) bedeckt und gestützt wird.

6. Verfahren nach einem der vorhergehenden Ansprüche,
**dadurch gekennzeichnet, dass** die Oberfläche der Substratplatte (10, 110 a-c, 210 a-c) in eine erste Oberfläche eines ersten Substratplattensegments und zumindest eine weitere Oberfläche eines weiteren Substratplattensegments unterteilt ist.

7. Verfahren nach Anspruch 6,
**dadurch gekennzeichnet, dass** die Substratplattensegmente lösbar miteinander oder lösbar mit einem Grundträger (20) verbunden sind und jedes Substratplattensegment nach Herstellen eines oder mehrere Produkte auf seiner Oberfläche von einem benachbarten Substratplattensegment oder dem Grundträger gelöst wird, um das/die darauf befindliche(n) Produkt(e) weiteren Bearbeitungsschritten zuzuführen.

8. Verfahren nach Anspruch 6 oder 7,
**dadurch gekennzeichnet, dass** die Substratplattensegmente in dem Fertigungsabschnitt, in dem die Schichten aufgetragen werden, so nebeneinander bereitgestellt werden, dass zwischen den Substratplattensegmenten kein Material hindurchtreten kann.

9. Verfahren nach einem der vorhergehenden Ansprüche 6-8,
**dadurch gekennzeichnet, dass** die Substratplattensegmente als Segmente einer Endlosfördervorrichtung (120) ausgebildet sind.

10. Verfahren nach einem der vorhergehenden Ansprüche 6-9,
**dadurch gekennzeichnet, dass** zwischen den Substratplattensegmenten eine Trennwand (61) bereitgestellt wird, welche den oberhalb jedes Substratplattensegments bestehenden Bauraum von dem oberhalb eines benachbarten Substratplattensegments bestehenden Bauraum abtrennt.

11. Verfahren nach dem vorhergehenden Anspruch 10,
**dadurch gekennzeichnet, dass** die Trennwand (61) durch Aushärten des aufgetragenen Material während des Herstellungsvorgangs des/der Produkts/Produkte hergestellt wird.

12. Verfahren nach einem der vorhergehenden Ansprüche,
**dadurch gekennzeichnet, dass** vor jedem Materialauftrag die ausgehärteten Bereiche der zuvor aufgetragenen Schicht oberflächlich beschliffen werden.

13. Vorrichtung zur Herstellung von Produkten mit individueller Geometrie, umfassend
- eine Substratplatte (10, 110 a-c, 210 a-c)
- eine Materialauftragsvorrichtung zum Auftragen von Materialschichten auf die und oberhalb der Substratplatte,
- eine Strahlungsquelle (40, 140) für einen hochenergetischen Strahl,
- Strahfführungsmittel zum Führen des Strahls auf vorbestimmte Bereiche einer auf die Substratplatte aufgetragenen Materialschicht,
**dadurch gekennzeichnet, dass** die Materialauftragsvorrichtung ausgebildet ist, um das Material in einer Ebene aufzutragen, die schräg, insbesondere in einem Winkel (α) der kleiner oder gleich dem Schüttwinkel des Materials ist, zu der Oberflächen der Substratplatte ausgerichtet ist, auf welche das Material aufgetragen wird.

14. Vorrichtung nach Anspruch 13,
**dadurch gekennzeichnet, dass**
- Die Substratplatte (10, 110 a-c, 210 a-c) in mehrere Substratplattensegmente unterteilt ist,
- Die Materialauftragsvorrichtung zum simultanen Auftragen einer Materialschicht auf eine Anzahl der mehreren Substratplattensegmente ausgebildet ist.

15. Vorrichtung nach Anspruch 14,
**dadurch gekennzeichnet, dass** die Substratplattensegmente lösbar miteinander oder lösbar mit einem Grundträger (20) verbunden sind,

16. Vorrichtung nach einem der vorhergehenden Ansprüche 13-15,
**gekennzeichnet durch** eine Steuerung zur Ansteuerung der Strahlführungsmittel des hochenergetischen Strahls, welche ausgebildet ist, um die Strahlführungsmittel so anzusteuern, dass eine Trennwand (61) während des Herstellungsvorgangs des Produkts **durch** Aushärten des aufgetragenen Materials hergestellt wird.

## Claims

1. Method of producing products with individual geometry, in particular dental prostheses or dental auxiliary parts, comprising the steps:
- producing several products on the surface of a substrate plate (10, 110a-c, 210a-c) by means of selective curing, in particular by means of selective sintering or melting,
- applying a curable material in successive steps,
- selective curing of one or more predefined regions after applying each layer by means of a high-energy radiation (41) and thus joining these regions to one or more regions of the layer underneath,
- which predefined region(s) is/are predefined on the basis of a cross-sectional geometry of the product in the respective layer,
**characterised in that** the successive layers are applied in layer planes oriented at an angle to the surface of the substrate plate (10, 110a-c, 210a-c).

2. Method as claimed in claim 1,
**characterised in that** each of the successive layers is applied at an angle that is smaller than or equal to the angle of repose (α) of the material.

3. Method as claimed in one of the preceding claims,
**characterised in that** the substrate plate (10, 110a-c, 210a-c) is moved between two successive layer application operations with a directional component perpendicular to the plane in which the layer is applied.

4. Method as claimed in one of the preceding claims,
**characterised in that** the surface of the substrate plate (10, 110a-c, 210a-c) in the region in which the layers are applied extends at an angle to the horizontal by reference to the direction of gravitational force.

5. Method as claimed in one of the preceding claims,
**characterised in that** the applied layers are moved into an adjacent production portion constituting a holding region which is adjacent to a production portion in which the layers are applied, where a top surface of the applied material formed by the applied layers is covered by a bottom surface of a cover plate (28c) extending parallel with the surface of the substrate plate (10, 110a-c, 210a-c) and supported.

6. Method as claimed in one of the preceding claims, **characterised in that** the surface of the substrate plate (10, 110a-c, 210a-c) is subdivided into a first surface of a first substrate plate segment and at least one other surface of another substrate plate segment.

7. Method as claimed in claim 6,
**characterised in that** the substrate plate segments are releasably connected to one another or releasably connected to a main carrier (120) and each substrate plate segment is released from an adjacent substrate plate segment or from the main carrier after one or more products have been produced on its surface in order to forward the product(s) disposed thereon for other processing steps.

8. Method as claimed in claim 6 or 7,
**characterised in that** the substrate plate segments in the production portion in which the layers are applied are positioned next to one another in such a way that no material is able to pass between the substrate plate segments.

9. Method as claimed in one of preceding claims 6-8,
**characterised in that** the substrate plate segments are segments of an endless conveyor device (120).

10. Method as claimed in one of preceding claims 6-9, **characterised in that** a dividing wall (61) is disposed between the substrate plate segments which separates the building space disposed above each substrate plate segment from the building space disposed above an adjacent substrate plate segment.

11. Method as claimed in preceding claim 10,
**characterised in that** the dividing wall (61) is produced by curing the material applied during the process of producing the product(s).

12. Method as claimed in one of the preceding claims,
**characterised in that** the cured regions of the previously applied layer are surface-ground prior to each application of material.

13. Device for producing products with individual geometry, comprising
- a substrate plate (10, 110a-c, 210a-c).
- a material applicator device for applying material layers onto and above the substrate plate,
- a radiation source (40, 140) for a high-energy beam,
- beam guiding means for guiding the beam to predefined regions of a material layer applied to the substrate plate,
**characterised in that** the material applicator device is designed to apply the material in a plane which is oriented at an angle to the surfaces of the substrate plate to which the material is applied, in particular at an angle (α) that is smaller than or equal to the angle of repose of the material.

14. Device as claimed in claim 13,
**characterised in that**
- the substrate plate (10, 110a-c, 210a-c) is subdivided into several substrate plate segments,
- the material applicator device is designed to apply a material layer simultaneously to a number of the several substrate plate segments.

15. Device as claimed in claim 14,
**characterised in that** the substrate plate segments are releasably connected to one another or releasably connected to a main carrier (20).

16. Device as claimed in one of preceding claims 13-15,
**characterised by** a controller for activating the beam guiding means of the high-energy beam, which is designed to activate the beam guiding means so that a dividing wall (61) is produced during the process of producing the product by curing the applied material.

## Revendications

1. Procédé de fabrication de produits présentant une géométrie individuelle, en particulier de prothèses dentaires ou de parties auxiliaires dentaires, comprenant les étapes de :
- fabrication de plusieurs produits sur la surface d'une plaque de substrat (10,110 a-c, 210 a-c) par un durcissement sélectif, en particulier par un frittage sélectif ou une fusion sélective,
- application d'un matériau durcissable en couches successives,
- durcissement sélectif d'une ou plusieurs zones prédéterminées après chaque application de couche par un rayonnement riche en énergie (41) et ce faisant, liaison de ces zones avec une ou plusieurs zones de la couche sous-jacente,
- la/les zone(s) prédéterminée(s) étant prédéterminée(s) en fonction d'une géométrie de section du produit dans la couche respective,
**caractérisé en ce que** les couches successives sont appliquées en plans de couche qui sont dirigés obliquement par rapport à la surface de la plaque de substrat (10, 110 a-c, 210 a-c).

2. Procédé selon la revendication 1,
**caractérisé en ce que** chacune des couches successives est appliquée en un angle (α) qui est inférieur ou égal à l'angle de déversement du matériau.

3. Procédé selon l'une quelconque des revendications précédentes,
**caractérisé en ce que** la plaque de substrat (10, 110 a-c, 210 a-c) est déplacée entre deux opérations d'application de couches successives avec un composant d'orientation perpendiculaire au plan dans lequel la couche est appliquée.

4. Procédé selon l'une quelconque des revendications précédentes,
**caractérisé en ce que** la surface de la plaque de substrat (10, 110 a-c, 210 a-c) dans la zone dans laquelle les couches sont appliquées est oblique par rapport à l'horizontale relative à la direction de la gravité.

5. Procédé selon l'une quelconque des revendications précédentes,
**caractérisé en ce que** les couches appliquées sont acheminées dans une section de production voisine qui est voisine d'une section de production dans laquelle les couches sont appliquées, en tant que zone d'arrêt, dans laquelle une surface supérieure du matériau appliqué formée par les couches appliquées est revêtue et étayée par une surface inférieure s'étendant parallèlement à la surface de la plaque de substrat (10, 110 a-c, 210 a-c) d'une plaque de revêtement (28c).

6. Procédé selon l'une quelconque des revendications précédentes,
**caractérisé en ce que** la surface de la plaque de substrat (10, 110 a-c, 210 a-c) est subdivisée en une première surface d'un premier segment de plaque de substrat et au moins une autre surface d'un autre segment de plaque de substrat.

7. Procédé selon la revendication 6,
**caractérisé en ce que** les segments de plaque de substrat sont reliés conjointement de façon amovible ou de façon amovible avec un support de base (20) et chaque segment de plaque de substrat est détaché après la production d'un ou plusieurs produits sur sa surface d'un segment de plaque de substrat voisin ou du support de base pour amener le/les produit(s) se trouvant sur celui-ci à d'autres étapes de traitement.

8. Procédé selon la revendication 6 ou 7,
**caractérisé en ce que** les segments de plaque de substrat dans la zone de production dans laquelle les couches sont appliquées, sont proposés côte à côte de telle sorte qu'aucun matériau ne puisse entrer entre les segments de plaque de substrat.

9. Procédé selon l'une quelconque des revendications 6 à 8,
**caractérisé en ce que** les segments de plaque de substrat sont conçus comme des segments d'un dispositif d'acheminement en continu (120).

10. Procédé selon l'une quelconque des revendications précédentes 6 à 9,
**caractérisé en ce que**, entre les segments de plaque de substrat se trouve une paroi de séparation (61) qui sépare l'espace de construction se trouvant au-dessus de chaque segment de plaque de substrat de l'espace de construction se trouvant au-dessus d'un segment de plaque de substrat voisin.

11. Procédé selon la revendication 10 précédente,
**caractérisé en ce que** la paroi de séparation (61) est produite par durcissement du matériau appliqué pendant le processus de fabrication du/des produits.

12. Procédé selon l'une quelconque des revendications précédentes,
**caractérisé en ce que**, avant chaque application de matériau, les zones durcies de la couche appliquée auparavant sont polies superficiellement.

13. Dispositif de fabrication de produits présentant une géométrie individuelle, comprenant
- une plaque de substrat (10, 110 a-c, 210 a-c)
- un dispositif d'application de matériau pour appliquer des couches de matériau sur la plaque de substrat et au-dessus de celle-ci
- une source de rayonnement (40, 140) pour un rayonnement hautement énergétique,
- un moyen de guidage du rayon pour guider le rayon sur des zones prédéterminées d'une couche de matériau appliquée sur la plaque de substrat,
**caractérisé en ce que** le dispositif d'application de matériau est conçu pour appliquer le matériau dans un plan qui est orienté de façon oblique, en particulier en un angle (α) qui est inférieur ou égal à l'angle de déversement du matériau, sur les surfaces de la plaque de substrat sur lesquelles le matériau est appliqué.

14. Dispositif selon la revendication 13,
**caractérisé en ce que**
- la plaque de substrat (10, 110 a-c, 210 a-c) est subdivisée en plusieurs segments de plaque de substrat,
- le dispositif d'application de matériau est conçu pour l'application simultanée d'une couche de matériau sur un nombre de plusieurs segments de plaques de substrat.

15. Dispositif selon la revendication 14,
**caractérisé en ce que** les segments de plaque de substrat sont reliés conjointement de façon amovible ou de façon amovible avec un support de base (20).

16. Dispositif selon l'une quelconque des revendications précédentes 13 à 15,
**caractérisé par** une commande pour commander le moyen de guidage du rayon du rayon hautement énergétique, qui est conçue pour commander le moyen de guidage du rayon de telle sorte qu'une paroi de séparation (61) soit produite pendant le processus de fabrication du produit par durcissement du matériau appliqué.
